# EUROPÄISCHE PATENTSCHRIFT

(11) **EP 1 105 637 B1**
(45) Veröffentlichungstag und Bekanntmachung des Hinweises auf die Patenterteilung: **07.04.2004**
(21) Anmeldenummer: 00938524.6
(22) Anmeldetag: 29.04.2000
(51) Int. Cl.: F02M 25/08

(54) **MAGNETVENTIL**
SOLENOID VALVE
SOUPAPE MAGNETIQUE

(30) Priorität: 19.06.1999 DE 19928207
(43) Veröffentlichungstag der Anmeldung: 13.06.2001
(73) Patentinhaber: ROBERT BOSCH GMBH, 70442 Stuttgart (DE)
(72) Erfinder: MEISIEK, Achim, D-73635 Rudersberg (DE)
(86) Internationale Anmeldenummer: PCT/DE2000/001362
(87) Internationale Veröffentlichungsnummer: WO 2000/079118

(56) Entgegenhaltungen:
- US-A- 3 652 054
- US-A- 5 089 977
- US-A- 5 624 150

## Beschreibung

### Stand der Technik

Die Erfindung betrifft ein Magnetventil, insbesondere zur Tankentlüftung bei Kraftfahrzeugen nach der Gattung des Anspruchs 1.

Derartige Ventile gehen beispielsweise aus der DE 42 44 113 A1 sowie aus der DE 196 11 886 A1 sowie aus der DE 198 52 980.5 hervor. Der Magnetkern wird durch Eindrehen in das Gewinde in dem Magnetgehäuse zu Justierzwekken axial verschoben. Eine derartige Justage geht beispielsweise auch aus der US 5.424.704 hervor, jedoch wird dort der Magnetkern in dem aus Kunststoff bestehenden Spulenträger verschraubt.

Um nach der Justage eine Verdrehsicherung vorzusehen, ist es bekannt, auf das Gewinde Kunststoffschichten, wie z.B. Tuflok oder einen Kleber aufzutragen. Darüber hinaus sind Verdrehsicherungen durch nachträgliches Verschweißen, Verstemmen der beiden Gewinde miteinander bekannt.

Derartige Verdrehsicherungen erfordern zusätzliche Verfahrensschritte zur Herstellung des Magnetkerns und verursachen daher Zusatzkosten. Darüber hinaus sind stark schwankende Losdrehmomente durch Toleranzschwankungen des Magnetkerns und des topfförmigen Magnetgehäuses sowie der Kunststoff-, insbesondere Tuflok- oder Klebeschicht problematisch.

Schließlich ist eine derartige Verdrehsicherung auch empfindlich gegen Temperaturschwankungen und Schwingungsbeanspruchungen.

Aufgabe der Erfindung ist es, bei einem Ventil der gattungsgemäßen Art eine gegenüber Temperaturschwankungen und Schwingungsbeanspruchungen sowie gegenüber Toleranzschwankungen zwischen Magnetkern und Magnetgehäuse weitestgehend unempfindliche Justiermöglichkeiten und Verdrehsicherung des Magnetkerns, die auf einfache Weise herzustellen ist, zu ermöglichen.

### Vorteile der Erfindung

Diese Aufgabe wird bei einem Magnetventil der eingangs beschriebenen Art durch die Merkmale des Anspruchs 1 gelöst.

Durch den weiteren Außengewindeabschnitt an dem hohlzylindrischen Magnetkern, der sich vorteilhafterweise spanfrei seinen eigenen Gewindegang in dem Spulenträger formt und sich dort verdrehsicher verpreßt, wird auf einfach herzustellende Weise eine optimale Verdrehsicherung erzielt, wobei durch den Wegfall der zum Stand der Technik bekannten Klebe- oder Kunststoffschichten nur noch die Toleranzen von zwei Komponenten für die Verdrehsicherung berücksichtigt werden müssen, die im Hinblick auf die Herstellung prozeßsicherer gehalten werden können. Darüber hinaus weist eine derartige Verdrehsicherung gut einstellbare Losdrehmomente auf. Sie weist darüber hinaus eine wesentlich höhere Festigkeit auf, als eine dünne Kunststoff- oder Klebeschicht, die bei aus dem Stand der Technik bekannten Verdrehsicherungen zum Einsatz kommt. Die Justiergenauigkeit bleibt durch die Verschraubung des Magnetkerns im metallenen Magnetgehäuse erhalten.

### Zeichnung

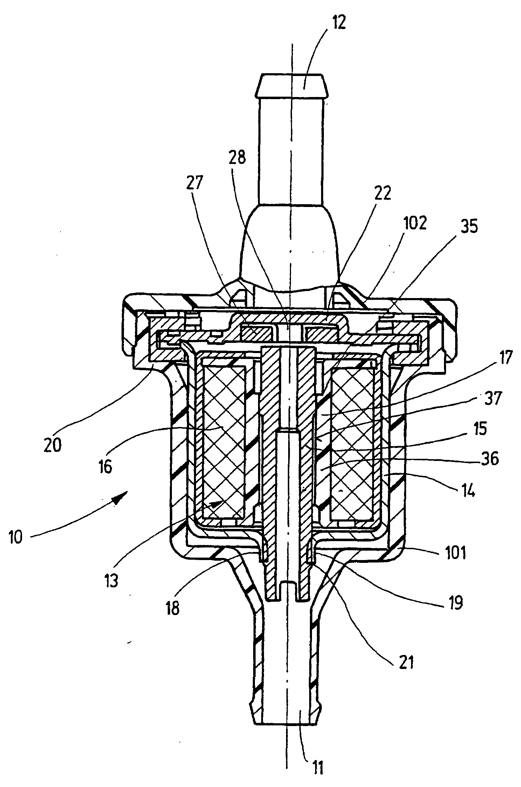

Weitere Vorteile und Merkmale der Erfindung sind Gegenstand der nachfolgenden Beschreibung sowie der zeichnerischen Darstellung eines Ausführungsbeispiels. In der einzigen Figur ist schematisch ein Längsschnitt durch ein erfindungsgemäßes Ventil dargestellt.

### Beschreibung der Ausführungsbeispiele

Ein Ausführungsbeispiel eines Ventils, in der Figur im Längsschnitt dargestellt, dient zum dosierten Zumischen von aus dem Brennstofftank einer (nicht dargestellten) gemischverdichtenden fremdgezündeten Brennkraftmaschine verflüchtigtem Brennstoff in die Brennkraftmaschine, z.B. in ein Ansaugrohr oder bei einer Benzindirekteinspritzung direkt in einen Zylinder der Brennkraftmaschine und ist Teil eines nicht näher dargestellten Brennstoffverdunstungs-Rückhaltesystems einer Brennkraftmaschine. Der Aufbau und die Funktion derartiger Brennstoffverdunstungs-Rückhaltesysteme ist beispielsweise der "Bosch Technische Unterrichtung Motormanagement Motronic", 2. Ausgabe, August 1993, Seiten 48 und 49 entnehmbar. Ein Tankentlüftungsventil und dessen Funktion geht beispielsweise aus der DE 42 44 113 A1 sowie aus der DE 196 11 886 A1, auf die vorliegend Bezug genommen wird, hervor.

Das Tankentlüftungsventil weist ein zweiteiliges Ventilgehäuse 10 mit einem topfförmigen Gehäuseteil 101 und einem diesen abschließenden kappenförmigen Gehäuseteil 102 auf. Der Gehäuseteil 101 trägt einen Zuströmstutzen 11 zum Anschließen an einen Entlüftungsstutzen des Brennstofftanks oder an einen diesem nachgeschalteten, mit Aktivkohle gefüllten Speicher für den verflüchtigten Brennstoff. Der Gehäuseteil 102 trägt einen Abströmstutzen 12 zum Anschließen an das Ansaugrohr der Brennkraftmaschine. Der Zuströmstutzen 11 und der Abströmstutzen 12 sind beispielsweise miteinander fluchtend jeweils axial in den Gehäuseteilen 101, 102 angeordnet. Im Inneren des topfförmigen Gehäuseteils 101 ist ein Elektromagnet 13 angeordnet.

Der Elektromagnet 13 weist ein topfförmiges Magnetgehäuse 14 mit einem den Topfboden durchdringenden, koxialen, hohlzylindrischen Magnetkern 15 und eine zylindrische Erregerspule 16 auf, die auf einem Spulenträger 17 aus Kunststoff sitzt, der im Magnetgehäuse 14 den Magnetkern 15 umschließt. Am Boden des metallenen Magnetgehäuses 14 ist ein nach außen vorspringender Gewindestutzen 18 mit einem Innengewinde 19 ausgebildet, das mit einem ersten Außengewindeabschnitt 21 des hohlzylindrischen Magnetkerns 15 verschraubt ist. Der Magnetkern 15 kann damit durch Drehen im Magnetgehäuse 14 zu Justierzwecken infolge der Metall-Metall-Verschraubung sehr exakt axial verschoben werden. Der Magnetkern 15 fluchtet mit dem Zuströmstutzen 11, so daß der hier einströmende, verflüchtigte Brennstoff direkt den Magnetkern 15 durchströmt.

Um eine Verdrehsicherung zu realisieren, ist auf dem Magnetkern 15 im Bereich des Spulenträgers 17 ein zweiter Außengewindeabschnitt 35 angeordnet, der sich beim Eindrehen des Magnetkerns 15 in das an dem Gewindestutzen 18 angeordnete Innengewinde 19 einen eigenen Gewindegang in dem Spulenträger 17 spanfrei formt. Der Spulenträger 17 hat dabei eine Trägerhülse 36, die eine beispielsweise gestufte Durchgangsöffnung 37 aufweist, deren Durchmesser beispielsweise größer als der Durchmesser des ersten Außengewindeabschnitts 21 des Magnetkerns 15 ist, so daß hierbei der Magnetkern 15 von oben zunächst mit dem den ersten Außengewindeabschnitt 21 aufweisenden Ende durch die Durchgangsöffnung 37 gesteckt wird, um mit dem Innengewinde 19 des Gewindestutzens 19 in Berührung zu kommen. Beim Einschrauben des ersten Außengewindeabschnitts 21 in den Gewindestutzen 18 schneidet sich dann der zweite Außengewindeabschnitt 35 in die Durchgangsöffnung 37 der Trägerhülse 36 und bildet eine Verdrehsicherung. Eine derartige Verdrehsicherung weist eine hohe Festigkeit auf, sie ist einfach herzustellen und ermöglicht gut einstellbare Losdrehmomente. Insbesondere können zusätzliche Werkstoffe zur Verdrehsicherung, die aus dem Stand der Technik bekannt sind, wie z.B. Klebeschichten oder Kunststoffschichten entfallen.

Der Rand des Magnetgehäuses 14 ist zu einem ringförmigen Auflageflansch 20 abgewinkelt. Im Auflageflansch 20 ist ein ein Rückschlußjoch 22 des Elektromagneten 13 bildender Ventilsitzkörper aufgenommen, der das Magnetgehäuse 14 abdeckt und randseitig auf dem Auflageflansch 20 aufliegt. In dem den Ventilsitzkörper bildenden Rückschlußjoch 22 sind Ventilöffnungen vorgesehen, die mittels eines zwischen dem Rückschlußjoch 22 und dem Magnetkern 15 angeordneten und als Magnetanker dienenden Ventilgliedes 27 verschließbar sind. Zentral im Ventilglied 27 ist koaxial zum hohlzylindrischen Magnetkern 15 eine axiale Durchgangsöffnung 28 vorgesehen, durch die vom Zuströmstutzen 11 herkommender, verflüchtigter Brennstoff bei geöffneten Ventilöffnungen zum Abströmstutzen 12 gelangen kann. Das aus magnetisch leitendem Material hergestellte Ventilglied 27 ist federbelastet in Ventilschließrichtung in Richtung des Abströmstutzens 12 angeordnet.

Durch die axiale Verstellung des Magnetkerns 15 wird der Hub des Ventilgliedes 27 einjustiert. Durch die Metall-Metall-Verschraubung des Magnetkerns 15 am Gewindestutzen 18 ergeben sich auch bei Temperaturwechseln nur vernachlässigbar kleine Änderungen des Ventilgliedhubes. Demgegenüber bewirkt die Kunststoff-Metall-Verschraubung zwischen Magnetanker 15 und Trägerhülse 36 bei Temperaturwechsel aufgrund der unterschiedlichen Ausdehnungskoeffizienten eine Erhöhung der Verdrehsicherung.

## Patentansprüche

1. Magnetventil, insbesondere zur Tankentlüftung bei Kraftfahrzeugen, mit wenigstens einer Ventilöffnung und mit einem zur Freigabe und zum Verschließen mit der wenigstens einen Ventilöffnung zusammenwirkenden Ventilglied (27), das einen Magnetanker eines Elektromagneten (13) bildend gegenüber einem Magnetkern (15) des Elektromagneten (13) angeordnet ist, wobei eine Erregerspule (16) auf einem Spulenträger (17) angeordnet ist, der in einem Magnetgehäuse (14) angeordnet ist und den Magnetkern (15) umschließt, und wobei in dem Magnetgehäuse (14) ein Gewinde (19) vorgesehen ist, das mit einem ersten Außengewindeabschnitt (21) des Magnetkerns (15) verschraubt ist, **dadurch gekennzeichnet, daß** an dem Magnetkern (15) ein zweiter Außengewindeabschnitt (35) angeordnet ist, der beim Einschrauben des Magnetkerns (15) in das Magnetgehäuse (14) einen Gewindegang in dem Spulenträger (17) formt.

2. Ventil nach Anspruch 1, **dadurch gekennzeichnet, daß** der zweite Außengewindeabschnitt (35) den Gewindegang in dem Spulenträger (17) spanfrei formt.

## Claims

1. Solenoid valve, in particular for tank ventilation in motor vehicles, with at least one valve orifice and with a valve member (27) which cooperates with the at least one valve orifice for opening and closing and which, forming a magnet armature of an electromagnet (13), is arranged opposite a magnet core (15) of the electromagnet (13), an exciting coil (16) being arranged on a coil former (17) which is arranged in an magnet housing (14) and surrounds the magnet core (15), and the magnet housing (14) having provided in it a thread (19) which is screwed together with a first externally threaded portion (21) of the magnet core (15), **characterized in that** the magnet core (15) has arranged on it a second externally threaded portion (35) which, when the magnet core (15) is screwed into the magnet housing (14), forms a thread flight in the coil former (17).

2. Valve according to Claim 1, **characterized in that** the second externally threaded portion (35) forms the thread flight in the coil former (17) in a non-cutting manner.

## Revendications

1. Soupape magnétique, notamment pour le dégazage des réservoirs de véhicules automobiles comportant :
- au moins une ouverture de soupape et, un organe de soupape (27) qui coopère avec au moins une telle ouverture pour l'ouvrir ou la fermer, et qui, pour former l'induit magnétique d'un électroaimant (13) est monté en face d'un noyau magnétique (15) de cet électroaimant (13),
- une bobine d'excitation (16) montée sur un support de bobine (12) et qui, entoure le noyau magnétique (15) à l'intérieur d'un boîtier d'aimant (14) qui présente un filetage (19) dans lequel est vissée une première section (21), d'un filetage externe du noyau magnétique (15),
**caractérisée en ce que**
le noyau magnétique (15) comporte une seconde section (35) de filetage externe qui, quand le noyau magnétique (15) est vissé dans le boîtier d'aimant (14) façonne un filetage dans le support de bobine (17)

2. Soupape magnétique selon la revendication 1,
**caractérisée en ce que**
la seconde section (35) du filetage externe façonne le filetage dans le support de bobine (17) sans produire de copeaux.
